# EUROPEAN PATENT APPLICATION

(11) **EP 4 676 164 A1**
(43) Date of publication of application: **07.01.2026**
(21) Application number: 24186718.3
(22) Date of filing: 05.07.2024
(51) Int. Cl.: H05B 45/20, H05B 45/46, B60Q 1/02, H05B 47/115

(54) **WORK LIGHT AND CONTROLLING ONE OR MORE WORK LIGHTS**

(71) Applicant: Nordic Lights Oy, 68600 Jakobstad (FI)
(72) Inventor: FRILUND, Henrik, 68600 JAKOBSTAD (FI); MÄKITALO, Mikko, 68600 JAKOBSTAD (FI); HOLMVIK, Kim, 68600 JAKOBSTAD (FI)
(74) Representative: Berggren Oy

(57) **Abstract**

The present disclosure relates to a work light, a method of controlling one or more work lights, a computer program product, an apparatus, a system, and a working vehicle. The work light comprises: a plurality of light emitting diodes, LEDs, arranged into a plurality of alternating rows of LEDs having a first correlated color temperature, CCT, and LEDs having a second CCT, wherein the first CCT is different from the second CCT; and a controller configured to receive one or more control signals for setting a brightness, a color temperature, and/or a light pattern of the work light, and control brightness of the plurality of LEDs to set the brightness, the color temperature, and/or the light pattern of the work light according to the one or more control signals.

## Description

### Technical Field

The present solution generally relates to a work light, a method of controlling one or more work lights, a computer program product, an apparatus configured to control one or more work lights, a system comprising one or more work lights and the apparatus, and a working vehicle comprising the apparatus or the system.

### Background

Work lights are often used to illuminate a working area where a worker, a working machine, and/or a working vehicle operates. Work lights may be attached to working machines and/or working vehicles. Different working conditions present various demands on working lights to achieve proper lighting that is suitable for the tasks performed. Operators of working vehicles seek ergonomic improvements as well as efficiency when using work lights in various scenarios. Changing working conditions require flexibility but also stability from the operation work lights.

### Summary of the Invention

The scope of protection sought for various embodiments of the invention is set out by the independent claims. Various embodiments are disclosed in the dependent claims. The embodiments and features, if any, described in this specification that do not fall under the scope of the independent claims are to be interpreted as examples useful for understanding various embodiments of the invention.

According to an aspect, a work light for illuminating the surroundings of a working vehicle comprises a plurality of light emitting diodes, LEDs, arranged into a plurality of alternating rows of LEDs having a first correlated color temperature, CCT, and LEDs having a second CCT, wherein the first CCT is different from the second CCT; and a controller configured to receive one or more control signals for setting a brightness, a color temperature, and/or a light pattern of the work light, and control brightness of the plurality of LEDs to set the brightness, the color temperature, and/or the light pattern of the work light according to the one or more control signals.

The plurality of LEDs may be arranged into at least four alternating rows of LEDs having the first CCT and LEDs having the second CCT.

The controller may be configured to set a brightness of the LEDs of a row of the plurality of alternating rows to a common row brightness level.

The LEDs of said row may be connected in series.

The controller may be configured to control the brightness of the plurality of LEDs such that the LEDs having the first CCT are set to a first brightness level and the LEDs having the second CCT are set to a second brightness level.

The LEDs having the first CCT may be connected in series, and the LEDs having the second CCT may be connected in series.

The work light may comprise one or more transmissive optical elements facing the plurality of LEDs, and the one or more transmissive optical elements may comprise a plurality of optical structures comprising one or more first optical structures facing first one or more of the plurality of LEDs, wherein the one or more first optical structures are configured to produce a first light pattern, and one or more second optical structures facing second one or more of the plurality of LEDs, wherein the one or more second optical structures are configured to produce a second light pattern, and wherein the first light pattern is different from the second light pattern.

The controller may be configured to illuminate the first one or more of the plurality of LEDs in response to receiving one or more control signals comprising instructions to set the first light pattern, and the controller may be configured to illuminate the second one or more of the plurality of LEDs in response to receiving one or more control signals comprising instructions to set the second light pattern.

The first light pattern may be configured to extend a first distance from the work light, and the second light pattern may be configured to extend a second distance from the work light, wherein the second distance is greater than the first distance.

The one or more first optical structures may be configured to face one or more of the LEDs having the first CCT and one or more of the LEDs having the second CCT, and the one or more second optical structures may be configured to face one or more of the LEDs having the first CCT and one or more of the LEDs having the second CCT.

For each optical structure, of the plurality of optical structures, configured to face at least one LED having the first CCT or the second CCT: the optical structure may be further configured to face at least one LED having the other one of the first CCT and the second CCT, and/or the plurality of optical structures may comprise a further optical structure configured to face at least one LED having the other one of the first CCT and the second CCT and to produce the same light pattern as said optical structure.

The plurality of optical structures may comprise, for each LED of the plurality of LEDs, an optical structure facing the LED, wherein the optical structure is configured to produce a different light pattern than the others of the plurality of optical structures.

According to a second aspect, a method of controlling one or more of the work lights comprises computing a lighting pattern target based on one or more of: sensor data measured by one or more sensors configured to measure a working vehicle and/or surroundings of the working vehicle, one or more predetermined lighting profiles, and/or one or more user inputs received via a user interface of the working vehicle, wherein the lighting pattern target defines at least a brightness, a color temperature, and/or a light pattern for the one or more work lights; converting the lighting pattern target to one or more control signals comprising instructions for setting the brightness, the color temperature, and/or the light pattern of the one or more work lights in accordance with the computed lighting pattern target; and outputting the one or more control signals to control the one or more work lights.

The method may comprise computing the lighting pattern target based at least on position sensor data measured by one or more position sensors configured to measure the position of an implement of the working vehicle and/or the position of a cabin of the working vehicle.

The method may comprise computing the lighting pattern target based at least on visibility sensor data measured by one or more visibility sensors configured to measure visibility in the surroundings of the working vehicle; detecting a low visibility condition based on the visibility sensor data; and setting a brightness, color temperature, and/or light pattern for the lighting pattern target based on the detected low visibility condition.

The method may comprise computing the lighting pattern target based at least on light sensor data measured by one or more light sensors configured to measure a brightness and/or a color temperature of ambient light in the surroundings of the working vehicle; and setting a color temperature of the lighting pattern target to correspond to the color temperature of the ambient light measured by the one or more light sensors, and/or setting a brightness of the lighting pattern target to counteract or correspond to the brightness of the ambient light measured by the one or more light sensors.

The one or more work lights may comprise a plurality of work lights, and the one or more control signals may comprise a group control signal comprising instructions for setting a group brightness level, a group color temperature, and/or a group light pattern for at least two of the plurality of work lights.

The method may comprise setting, for the lighting pattern target, a first brightness level for first one or more LEDs of the one or more work lights and a second brightness level for second one or more LEDs of the one or more work lights, the first brightness level being different from the second brightness level, wherein the first one or more LEDs are configured to provide lighting to a first area in the surroundings of the working vehicle, and wherein the second one or more LEDs are configured to provide lighting to a second area in the surroundings of the working vehicle.

The first brightness level or the second brightness level may be zero.

According to a third aspect, a computer program product comprises computer program code configured to, when executed by one or more processors, cause an apparatus to perform the method.

According to a fourth aspect, an apparatus is configured perform the method to control one or more of the work lights.

The apparatus may comprise one or more processors, one or more memories including computer program code, the one or more memories and the computer program code configured to, with the one or more processors, cause the apparatus to perform the method.

According to a fifth aspect, a system comprises one or more of the work lights and the apparatus.

The system may comprise the one or more sensors.

According to a sixth aspect, a working vehicle comprises the apparatus or the system.

### Brief Description of the Drawings

FIG. 1 illustrates embodiments of a system;
FIG. 2 illustrates embodiments of an apparatus;
FIG. 3 is a flow chart illustrating embodiments of a method of controlling one or more work lights;
FIG. 4 shows a front view of an embodiment of a work light;
FIG. 5 depicts an example control signal frame for controlling one or more work lights;
FIG. 6 shows example light beams emitted by an embodiment of the work light;
FIG. 7 shows a front view of another embodiment of the work light;
FIG. 8 is a circuit diagram showing electrical connections of LEDs;
FIG. 9 shows example PWM signals for controlling LEDs;
FIG. 10 illustrates some examples of controlling work light(s); and
FIG. 11 illustrates further examples of controlling work light(s).

### Detailed Description of the Invention

The following description and drawings are illustrative and are not to be construed as unnecessarily limiting. The specific details are provided for a thorough understanding of the disclosure. However, in certain instances, well-known or conventional details are not described in order to avoid obscuring the description. In this specification, reference to "one embodiment" or "an embodiment" means that a particular feature, structure, or characteristic described in connection with the embodiment is included in at least one embodiment of the disclosure. References to an embodiment can be, but are not necessarily, references to the same embodiment in the present disclosure.

The present disclosure relates to a work light, a method of controlling one or more work lights, a computer program product and an apparatus configured to control one or more work lights, a system comprising one or more work lights and the apparatus, and a working vehicle comprising the apparatus or the system. Work lights are often used to illuminate a working area where a worker, a working machine, and/or a working vehicle operates. Work lights may be attached to working machines and/or working vehicles.

Some examples of working vehicles include:
- construction vehicles, such as articulated trucks, asphalt track pavers, wheel loaders, bulldozers / track dozers, compactors / road rollers, excavators, mobile cranes, motor graders / scrapers, pile drivers, skid steer loaders, and tele handlers
- mining vehicles, such as articulated trucks, blast hole drills, bucket wheel excavators, borers / continuous miners, draglines, dump trucks, highwall miners, hydraulic / rope shovels, load haul dumps (LHD), rocket boomers / drilling jumbos, surface miners, and wheel loaders
- forestry vehicles, such as chippers, delimbers, feller bunchers, forwarders, harvesters, knuckleboom loaders, logging trucks, skidders, swing machines, and track dozers
- agricultural vehicles, such as bean harvesters, beet harvesters, combine harvesters, crop sprayers, forage harvesters, pea harvesters, potato harvesters, rape swathers, slurry spreaders, and tractors
- material handling vehicles, such as fork lift trucks, rubber-tyre gantry cranes (RTG), reach stackers, straddle carriers, tow tractors, tele handlers, and truck mounted cranes.

As working vehicles operate in different kinds of settings and with different lighting requirements, flexibility and versatility is required of work lights as well.

Working machines are similar to working vehicles and are used for similar tasks. However, they may not be capable of locomotion. Nevertheless, working vehicles may be substituted by working machines throughout this disclosure as the work light, method, apparatus, computer program product and system are suitable for use with working machines as well. Examples of working machines include non-moving variants of the above-mentioned working vehicles, as well as:
- construction working machines such as lighting masts and tower cranes
- material handling working machines such as container cranes, dockyard cranes, and harbour/port cranes

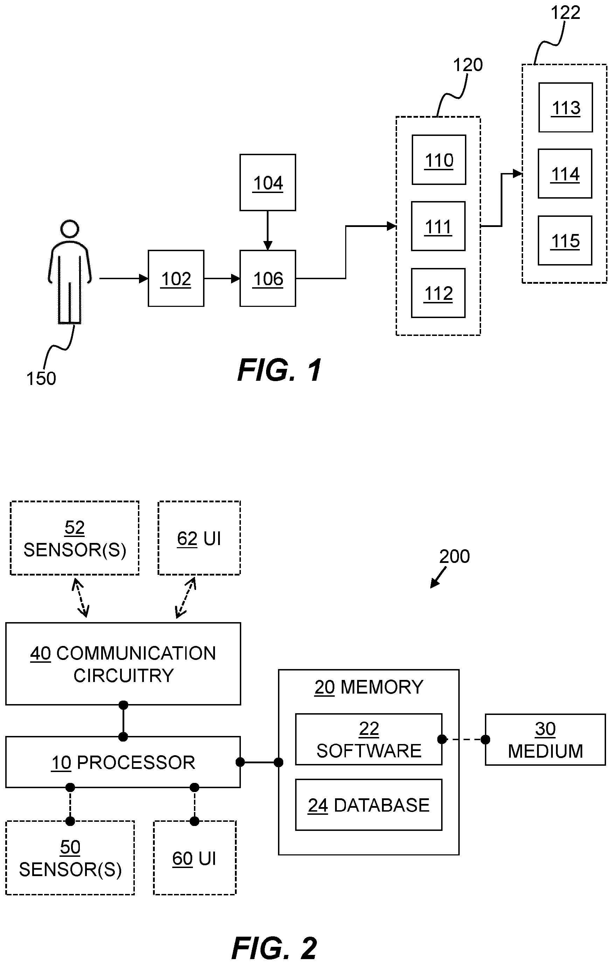

FIG. 1 depicts embodiments of a system. The system comprises an apparatus 106, preferably an electronic control unit (ECU) of a working vehicle. The system may further comprise a user interface (Ul) 102 that may be operated by user 150, and one or more sensor(s) 104 configured to measure the working vehicle and its surroundings. The UI and/or the sensor(s) may be integral parts of the working vehicle. The user is often a driver or an operator of the working vehicle. The system further comprises a plurality of work lights 110-115. In the embodiment of FIG. 1, the work lights are divided into two groups 120, 122, but any grouping (or lack thereof) is contemplated. The ECU is configured to send control signals e.g. via a bus to the first group and/or the second group of work lights to control the work lights. The ECU may be configured to receive inputs from the Ul 102 and/or the sensor(s) 104, and/or use pre-stored information when generating the control signals used to control the work lights.

FIG. 2 illustrates embodiments of an apparatus 200. The apparatus 106 (e.g. the ECU) of FIG. 1 may be implemented as the apparatus 200 shown in FIG. 2. The apparatus comprises one or more processors 10 such as a central processing unit (CPU). The apparatus may further include a graphics processing unit (GPU) (not shown) for processing e.g. image and/or video data received from relevant sensor(s) The apparatus 200 includes one or more memories, such as a random-access memory (RAM) and a non-volatile memory.

The apparatus 200 comprises a communication circuitry 40 for communicating with other devices. The communication circuitry may include one or more network interfaces for communicating with other devices via one or more networks, including wired and/or wireless networks. These network interfaces may comprise a cellular network interface, an Internet of Things (lOT) network interface, a personal area network (PAN) interface, a bus network interface and/or other suitable network interfaces. Preferred bus network interfaces include a controller area network (CAN) interface, preferably using the CAN J1939 or the CANopen protocol, and/or a Local Interconnect Network (LIN) interface, preferably LIN 2.2 (ISO/CD 17987).

The apparatus may comprise one or more sensors 50 and/or be coupled to one or more sensors 52 via its communication circuitry. The sensors are preferably configured to measure a working vehicle, its driver/operator, and/or the interior and/or the surroundings of the working vehicle. Example sensors include:
- light sensors such as cameras
- proximity/distance sensors such as time-of-flight (TOF) sensors, laser sensors, and/or ultrasound sensors
- position sensors
- infrared (IR) sensors
- movement sensors
- ultrasound sensors

The sensors 104 of FIG. 1 may be implemented as the sensors 50 and/or 52 shown in FIG. 2.

The apparatus may comprise a UI 60 and/or be coupled to a UI 62 via its communication circuitry. The UI may comprise various input and/or output devices, such as one or more of a display, a touch pad, a touch screen, a keyboard, a lever, a button, a speaker, a microphone, and/or a haptic output device. The UI may be configured to receive user inputs via its input devices from user(s) such as the user 150 of FIG. 1. The III 102 of FIG. 1 may be implemented as the UI 60 and/or 62 shown in FIG. 2.

As mentioned above, the apparatus may be implemented as an ECU of a working vehicle, preferably the working vehicle whose work light(s) it controls and whose sensor(s) and UI it receives data and user inputs from. The apparatus may be remote from the Ul, the sensor(s) and/or the one or more work lights. For example, the apparatus may be located in a data center and control the one or more work lights in a remote manner.

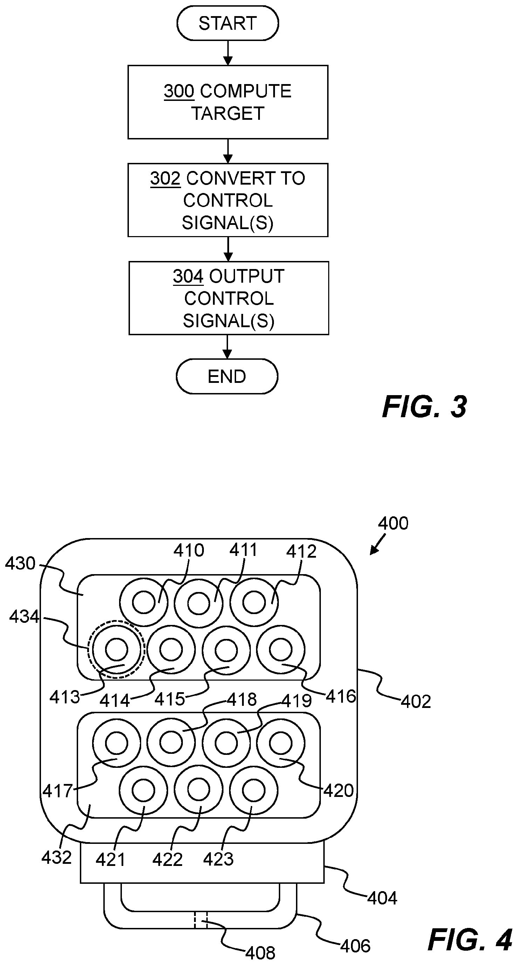

The apparatus 200 is configured to perform the method of FIG. 3 or any of its embodiments. The memory 20 of the apparatus includes computer program code 22 that, when executed by the processor 10 of the apparatus, causes the apparatus to perform the method or any of its embodiments. The computer program code 22 may be stored on a (non-transitory) computer-readable medium 30 in the form of a computer program product.

The method of FIG. 3 comprises computing 300 a lighting pattern target. The apparatus 200 (see FIG. 2) may compute the lighting pattern target based on sensor data measured by the sensor(s) 50, 52, one or more predetermined (and/or calculated) lighting profiles stored e.g. in the memory 20 of the apparatus, and/or one or more user inputs received via the UI 60, 62.

Lighting profiles may be stored e.g. in a database 24 in the memory 20. A lighting profile may define brightness(es), color temperature(s), and/or light pattern(s) for the work light(s). The apparatus may define lighting profiles in similar ways as lighting pattern targets.

User inputs may be received via the UI 60, 62 of the apparatus 200. User inputs may indicate which sensor data and/or which lighting profile(s), if any, are to be used by the apparatus in the computing. Based on one or more user inputs received by the apparatus 200, the apparatus may include sensor data and/or lighting profile(s) selected by the user and/or exclude sensor data and/or lighting profiles excluded by the user from the computing.

The lighting pattern target may define a desired lighting pattern or profile to be produced by the work light(s) being controlled by the apparatus. The lighting pattern target may be defined by the apparatus in terms of brightness, color temperature, and light pattern(s) of the work light(s) under control. The brightness may be defined as an overall brightness of the work light(s), as brightnesses of individual work lights, and/or as brightnesses of individual LEDs of work lights. The color temperature may be defined as an overall color temperature of the work light(s), and/or as color temperatures of individual work lights. The light pattern may be defined as an overall light pattern of the work light(s), and/or as light patterns of individual work lights.

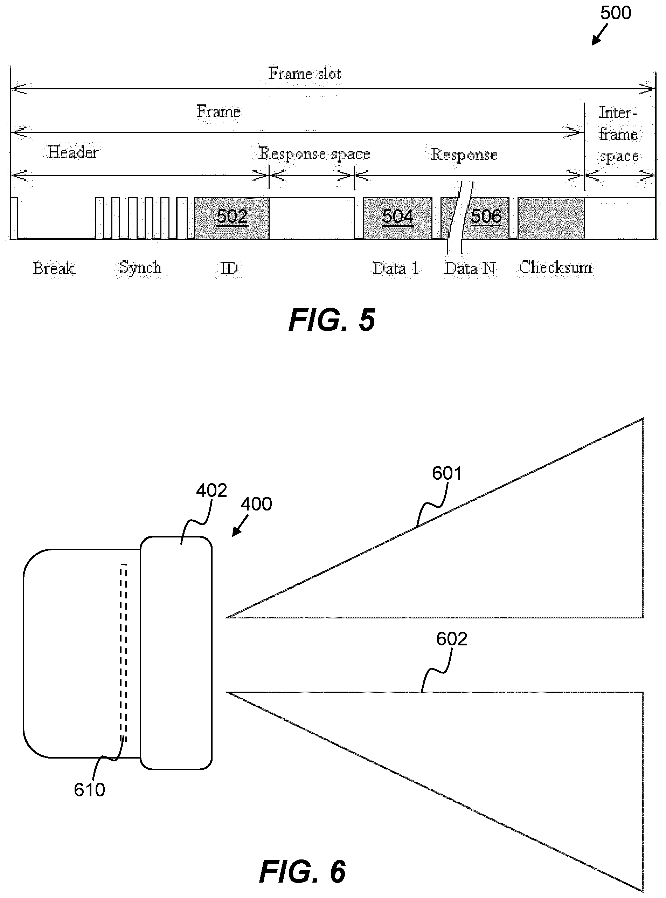

The method of FIG. 3 further comprises converting 302 the computed lighting pattern target (e.g. calculated or stored lighting profile) to one or more control signals. The control signals comprise instructions for the work lights to set their brightness, the color temperature, and the light pattern according to the computed lighting pattern target. Example control signals generated by the apparatus 200 (see FIG. 2) will be discussed in more detail with reference to FIG. 5. The apparatus converts the lighting pattern target to instructions for the work light(s) under its control. Identification of different work lights using IDs and control of several work lights with a single control signal using a group ID are discussed in detail with reference to FIG. 5. A mapping of IDs and respective work lights may be stored in the memory 20 of the apparatus 200 (see FIG. 2). Further information on the work lights, such as their positions in space and/or mounting locations on the working vehicle, or characteristic of individual LEDs and/or optical structures of the work lights may be stored in the memory. The apparatus may use the further information when computing the lighting pattern target and/or when converting the target to one or more control signals for the work lights.

The method of FIG. 3 further comprises outputting 304 the control signal(s). Referring again to FIG. 2, the apparatus 200 may output the control signal(s) by writing the control signal(s) to e.g. the memory 20 of the apparatus or to the external computer-readable medium 30 coupled to the apparatus. Alternatively, or additionally, the outputting may comprise sending the control signal(s) e.g. via one or more of the network interfaces of the communication circuitry 40. For example, the apparatus 100 of FIG. 1 may send the control signal(s) via the bus network interface of the apparatus to the work lights 110-115. The work lights 110-115 receive the control signal(s) via the bus and control their LEDs accordingly. Alternatively, or additionally, the outputting may comprise outputting the control signal(s) by the UI 102 of the apparatus 100 of FIG. 1 or the UI 60, 62 of the apparatus 200 of FIG. 2.

An embodiment of a work light that may be controlled with the above-described method, apparatus, system, and/or computer program product will now be described with reference to FIG. 4. For completeness it is noted that the method, apparatus, system, and/or computer program are suitable for controlling other kinds work lights as well.

FIG. 4 shows a front view of an embodiment of the work light 400. The work light comprises a frame 402 whose front face is shown, a mounting support 404 and a mounting handle 406. The work light 404 may be mounted to a working vehicle or a working machine with fastener(s) (e.g. screw or bolt) through a mounting hole 408 in the mounting handle. Other ways of mounting or attaching the work light to a working vehicle or working machine are also suitable.

The work light comprises a plurality of LEDs 410-423. The LEDs may be mounted on top of a circuit board (not shown). The LEDs comprise LEDs of two different correlated color temperatures (CCT): first plurality of LEDs 410-412, 417-420 with a first CCT, and second plurality of LEDs 413-416, 421-423 with a second CCT. The second CCT is different from the first CCT; herein it is considered that the first CCT is higher than the second CCT, but alternatively the second CCT and the first CCT may be reversed.

The first CCT may be in the range of 5000 to 6000 K, preferably 5500 K or 5700 K. The LEDs with the first CCT may emit cool, white light and may be referred to as cool LEDs.

The second CCT may be in the range of 3000 to 4000 K, preferably 3500 K or 3000 K. The LEDs with the second CCT may emit warm, white light or red light and may be referred to as warm or red LEDs.

The LEDs are arranged into a plurality of rows such that first LEDs 410-412 form a first row, second LEDs 413-416 form a second row below the first row, third LEDs 417-420 form a third row below the second row, and fourth LEDs 421-423 for a fourth row below the third row. The LEDs 410-412, 417-420 in the first and third rows have the first CCT and the LEDs 413-416, 421-423 in the second and fourth rows have the second CCT. The LEDs are thus arranged into alternating rows with respect to their CCT.

A technical effect of the alternating rows is increased stability of the resulting light pattern, and especially its shadows. This is most evident when output of the work light is adjusted and/or when objects close to the work light are brightly illuminated by the work light, and cast strong shadows. The mixing of the LEDs of different colors in the form of alternating rows reduces changes in the light pattern and shadows when the relative intensities of the LEDs of different colors are adjusted in comparison to a solution wherein the LEDs of different colors are separated from one another.

For completeness, it is noted that if the work light were rotated e.g. by 90 degrees clockwise or counterclockwise, the LEDs would seem to form alternating columns instead of rows. However, the arrangement of the LEDs into alternating rows with respect to each other is maintained irrespective of the orientation of the work light.

While the figures show the LEDs in straight rows, staggered rows are also permitted. For example, a hypothetical staggered row in the work light of FIG. 4 rotated by 90 degrees could be formed by LEDs 410, 414, 418, and 421 or 422, for example.

In the embodiment shown in FIG. 4 there are two rows of each of the LEDs having the first CCT and the LEDs having the second CCT. The first row is horizontally (along the lengthwise direction of the row) offset from the second and third rows such that midpoints of the first LEDs 410-412 are between, preferably half-way between the midpoints of the LEDs of the second and third rows. The same applies to the fourth row as shown.

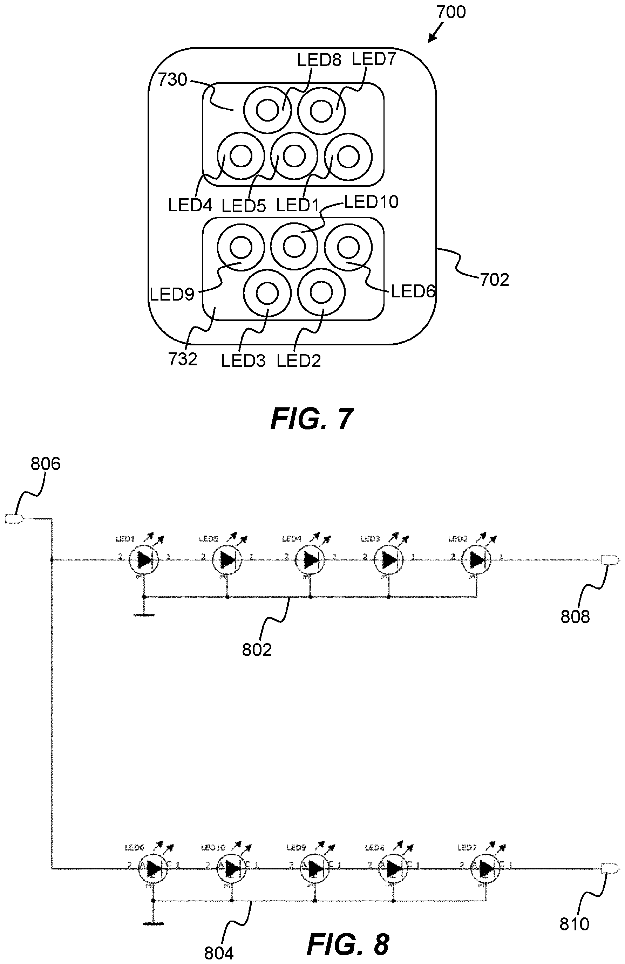

There are 7 LEDs with the first CCT and with the second CCT in the work light 400 of FIG. 4. Another embodiment with 5 LEDs with the first CCT and 5 LEDs with the second CCT is discussed with reference to FIG. 7. In such four-row configurations an odd number of LEDs of each CCT allows for the compact offset positioning of the shorter rows (with one LED less) with respect to the longer rows. The number of LEDs may vary and is not limited to numbers mentioned herein.

The work light 400 further comprises a controller for controlling the LEDs. The controller may be implemented with one or more processors and one or more memories, such as those shown in FIG. 2. The one or more processors and the one or more memories may be coupled to the circuit board onto which the LEDs are mounted. The work light may further comprise communication circuitry 40 and/or one or more network interfaces, like those described in relation to FIG. 1 and 2, for receiving control signals from the apparatus. Preferable interfaces are CAN J1939 or CANopen, or the LIN 2.2 (ISO/CD 17987) bus network interfaces.

Each LED may be controlled individually and/or independently of the other LEDs by the controller. Alternatively or additionally, the controller may be configured to set some or all of the LEDs having the first CCT to the same (first) brightness level with respect to each other, and/or to set some or all of the LEDs having the second CCT to the same (second) brightness level with respect to each other. The first brightness level of the LEDs with the first CCT may be the same or different from the second brightness level of the LEDs having the second CCT.

The apparatus and work light may communicate with master-slave communication, wherein the apparatus is the master. The controller of the work light is configured to receive control signals from the apparatus, e.g. via the above-mentioned CAN J1939/CANopen or the LIN 2.2 (ISO/CD 17987) buses. An example control signal frame 500 generated by the apparatus used to control the work light(s) is shown in FIG. 5. The frame comprises an identifier (ID) 502 which identifies the work light(s) for which the frame or control signal is intended to. Upon receiving the frame, the controller may compare the ID 502 to one or more IDs assigned to the work light and e.g. stored in the memory of the work light. If the IDs match, the controller may proceed with controlling the work light, and if not, the controller may stop and wait for further control signals.

As mentioned above, IDs may be stored in the memory of the work light. One or more IDs may be associated with a single work light. Each work light controlled by an ECU may have a lamp ID that is unique among the lamps controlled by the ECU. Additionally or alternatively, a work light may have one or more group IDs. A plurality of work lights may share the same group ID. The ECU may control work lights with the same group ID using a single control signal frame wherein the ID corresponds to the group ID. The ECU may set or reset group IDs for the work lights by outputting control signals for setting the group ID of one or more work lights.

The frame 500 of the control signal further comprises data 504, 506 for controlling the LEDs of the work light. For example, a first byte may represent brightness or intensity, and a second byte may represent CCT. The data may specify overall brightness and/or color temperature values for a work light, i.e. brightness and/or color temperature values the work light is to achieve with its plurality of LEDs acting together. Alternatively or additionally, the data may specify brightness values for one or more (or all) of the LEDs of the work light(s) controlled. The combination of relative brightness values of individual LEDs of a work light may define a light pattern of a work light, and the combination of light patterns of a plurality of work lights may define an overall light pattern for the plurality of work lights.

The controller receives the control signal, such as the frame 500 shown in FIG. 5, and controls the LEDs of the work light accordingly. The controller may convert the control signal to electrical signals for setting the brightness of each LED, thus also setting the color temperature and the light pattern of the work light.

FIG. 6 shows the work light 400 emitting example light beams 601 and 601. The LEDs emitting the light beams are surrounded by a front part of the frame 402 and controlled by hardware and software on PCB 610. In the example shown, a first beam 601 is emitted by a first set of LEDs which correspond to the LEDs 410-416 shown in FIG. 4. A second beam 602 is emitted by a second set of LEDs which correspond to the LEDs 417-423 shown in FIG. 4. A first light pattern is formed by the first beam 601 alone, with the LEDs contributing to the second beam deactivated by one or more control signals. A second light pattern is formed by the second beam 602 alone, with the LEDs contributing to the first beam deactivated by one or more control signals. A third light pattern is formed by the combination of both beams 601, 602. Further light patterns may be formed by combinations of the first and second light patterns at different relative intensities. Further, the CCT of each beam may be adjusted by setting the relative brightnesses of the LEDs having the first CCT and the LEDs having the second CCT within each beam.

Referring again to FIG. 4, the work light 400 may comprise optical elements or lenses 430, 432 in front of the LEDs. Two optical elements are shown, but any number including one is suitable, and the exact arrangement of optical element(s) may depend on the construction of the frame 402. The optical elements allow transmission of light from the LEDs to the outside of the of the work light but may comprise optical structures 434 that are configured to affect the light emitted by the LEDs through the optical elements. Each optical element produces a light pattern that contributes to the overall light pattern of the work light when the LED(s) it is facing is/are illuminated.

The optical structures face the LEDs. While only one optical structure 434 is explicitly shown, preferably there are optical structures facing all of the LEDs of the work light. The optical elements may comprise individual optical structures for each one of the LEDs of the work light. Each individual optical structure may face a single LED similarly to how optical structure 434 faces LED 413. Alternatively, one or more of the optical structures may face a plurality of the LEDs.

The work light preferably comprises different types of optical structures, i.e. optical structures that produce different light patterns for the same kind of LED. Preferred optical structure types defined terms of their light patterns are flood, wide flood, high beam, high beam for left hand traffic (LHT), high beam for right hand traffic (RHT), low beam, low beam for LHT, low beam for RHT, pencil beam, spot, diffused, and/or glare-free light patterns. A single optical structure may implement one or more (of the above) light patterns. These light patterns and optical structures for implementing them are generally known in the art and further details on their characteristics are thus omitted. Glare-free light patterns maybe implemented with cutoff optics configured to produce a cutoff in an area of the light pattern where illumination could cause glare.

Preferably, the work light comprises optical structures configured to produce light patterns that extend to different distances from the work light, such as a high beam light pattern and a low beam light pattern.

An optical structure, or a plurality of optical structures that produce the same light pattern, preferably face at least one LED with the first CCT and at least one LED with the second CCT. This allows for adjustment of color temperature by changing relative intensities of the different-colored LEDs without changing the shape of the light pattern. Preferably, equal numbers of LEDs with the first CCT and LEDs with the second CCT face an optical structure or a plurality of optical structures that produce the same light pattern. This further balances the color temperature adjustment and intensity of the resulting beam. These configurations are preferably applied to each type of optical structure (i.e. optical structure(s) that produce a certain light pattern) facing the LEDs. This ensures that LEDs of both colors face all types of optical structures, and preferably in equal numbers.

Alternatively, the optical element may comprise a unique optical structure for each LED. In this case each LED may produce a different light pattern than the others. In an intermediate alternative, each pair of LEDs including one LED with the first CCT and one LED with the second CCT faces a unique optical structure different from the other optical structures.

The controller may be configured to illuminate the LEDs facing one or more optical structures in response to control signals that comprise instructions to produce the light pattern that the one or more optical structures produce or contribute to. The controller allows for switching from one light pattern to another e.g. by illuminating first one or more of the plurality of LEDs facing one or more optical structures configured to produce a first light pattern, in response to receiving one or more control signals comprising instructions to set the first light pattern. Upon receiving further control signal(s) to set a second, different light pattern that is produced by second one or more optical structure(s) facing second one or more LED(s), the controller may illuminate the second LEDs, and optionally turn off or dim the first LEDs. The first LEDs may be left on by the controller to achieve a combined light pattern as the combination of the first and second light patterns.

The mapping of LEDs and their respective optical structures may be stored in the memory of the work light and/or in the memory of the apparatus used to control the work lights. The apparatus may utilize the mapping when computing the lighting pattern target and/or when converting the target to instructions for the work lights, to ensure that the effects of the optical structures are considered.

FIG. 7 shows another embodiment of the work light 700. The work light 700 may have the same features as the work light of FIG. 4, such as a frame 702 and optical elements 730, 732, but it has a different number and configuration of the LEDs. Some or all of the features of the work light 700 and its control shown and discussed herein with reference to FIG. 7 to 9 may be applied to the work light of FIG. 4.

The work light 700 comprises a plurality of LEDs LED1-10 mounted on a circuit board or PCB. A first plurality of LEDs LED1-5 have a first CCT, and second plurality of LEDs LED6-10 have a second CCT. The second CCT is different from the first CCT; herein it is considered that the first CCT is higher than the second CCT, but alternatively the second CCT and the first CCT may be reversed. Similar CCTs as discussed in relation to FIG. 4 may be applied. The first plurality of LEDs may thus be considered cool LEDs and the second plurality of LEDs warm LEDs.

First LEDs LED8, LED7 form a first row, second LEDs LED4, LED5, LED1 form a second row below the first row, third LEDs LED9, LED10, LED6 form a third row below the second row, and fourth LEDs LED3, LED2 form a fourth row below the third row. Due to the alternating rows with LEDs of the first and second CCT, stability of the light pattern is achieved as discussed in relation to FIG. 4.

FIG. 8 is a schematic showing electrical connections of the LEDs in the work light of FIG. 7. The cool LEDs LED1-5 are connected in series with respect to each other, and the warm LEDs LED6-10 are connected in series with respect to each other. The LEDs of each row are also connected in series with respect to each other: first LEDs LED8, LED7 are connected in series with each other, second LEDs LED4, LED5, LED1 are connected in series with each other, third LEDs LED9, LED10, LED6 are connected in series with each other, and fourth LEDs LED3, LED2 are connected in series with each other. The cool LEDs and the warm LEDs are connected in parallel.

The controller of the work light controls the warm LEDs together, and the cool LEDs together. The controller sets the LEDs in a particular row to a common row brightness level, which is further facilitated by the serial connections within the row. The controller further sets the warm LEDs to a common brightness level and the cool LEDs to a common brightness level, again facilitated by the serial connections of the warm LEDs and those of the cool LEDs. However, these brightness levels may be different from each other and thus the controller may control the warm LEDs independently of the cool LEDs. Each LED may be thermally coupled to a grounded conductor 802, 804 acting as a heat sink.

Each row of LEDs connected in series reduces the complexity of electrical connections on the circuit board on which the LEDs are mounted. As the LEDs within a row are adjacent to each other, shorter connections may be implemented between them. This allows for maintaining a compact size of the circuit board and thus also of the work light. Having LEDs of different CCTs in alternating rows with serial connections within one or more rows, preferably within each row, thus allows providing a compact work light with a stable light pattern.

In an example control scheme based on the schematic of FIG. 8, the controller controls a direct current (DC) signal 806 connected to both the cool LEDs LED1-5 and the warm LEDs LED6-10 to control the overall brightness of the work light. By decreasing the current of the signal 806, the work light may be dimmed by the controller. The controller further includes a first transistor arrangement coupled to signal 808, i.e. in series with the cool LEDs LED1-5, and a second transistor arrangement coupled to signal 810, i.e. in series with the warm LEDs LED6-10. These transistor arrangements are configured to perform pulse width modulation (PWM) for the LEDs. The first transistor arrangement is configured to control cool LEDs LED1-5 via PWM, and the second transistor arrangement is configured to control warm LEDs LED6-10 via PWM. A ratio of duty cycles of the PWM performed for the cool LEDs and the PWN performed for the warm LEDs may thus determine the overall color temperature of the work light. The controller may control this ratio based on the control signal(s) received from the apparatus for setting the color temperature.

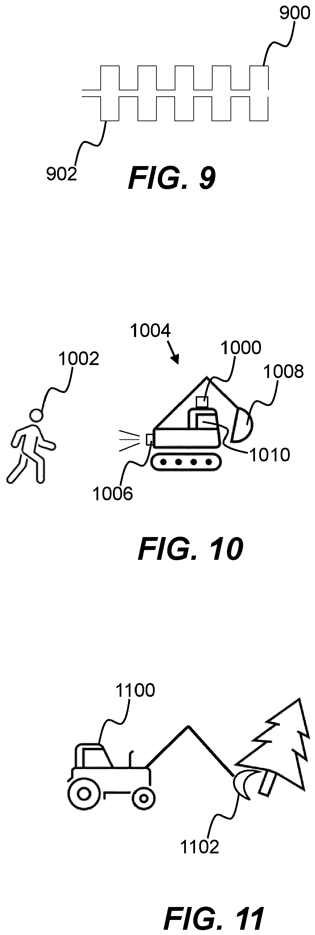

Preferably, the duty cycles of the PWM of the cool LEDs and the PWM of the warm LEDs are matched such that during a PWM cycle, when the cool LEDs or the warm LEDs are on, the other ones of the cool LEDs and the warm LEDs are off, and when the cool LEDs or the warm LEDs are off, the other ones of the cool LEDs and the warm LEDs are on. The sum of their duty cycles adds up to 100 % such that cool LEDs and warm LEDs are not on nor off at the same time with respect to each other. FIG. 9 illustrates example PWM signals 900, 902 for controlling the LEDs via PWM in this manner. For example, the first PWM signal 900 may be for controlling the cool LEDs, and thus correspond to signal 808 of FIG. 8 The second PWM signal may be for controlling the warm LEDs, and thus correspond to signal 810 of FIG. 8

Matching the duty cycles provides for steady power use and consistent overall brightness of the work light throughout the PWM cycle, especially if the cool and warm LEDs have the same or similar luminosity characteristics. It also allows for simplified control of the overall brightness via the DC signal 806. At least it is preferred that during a duty cycle, the warm LEDs are off when the cool LEDs are on, and the cool LEDs are off when the warm LEDs are on, to avoid spikes in power use.

As an alternative to the connections shown in FIG. 8, one or more of the LEDs may have individual electrical connections to the controller of the work light to allow for control of said LEDs independently of the other LEDs.

Various examples of controlling the work light(s) will now be discussed with reference to FIG. 10 and FIG. 11. In some examples, the lighting pattern target is defined as a differential lighting pattern target, i.e. as a difference with respect to current or previous lighting produced by the work light(s). The examples may be combined such that an apparatus or system may perform one or more of the examples.

In a first example, the system comprises one or more sensor(s) 1000 configured to detect persons 1002 in the surroundings of a working vehicle 1004. The sensors may include e.g. camera(s) or IR sensor(s). The apparatus may be configured to process the sensor data measured by the sensor(s) using image processing techniques to detect locations or positions of the persons in the surroundings of the working vehicle. The apparatus may then compute the lighting pattern target such that the position(s)/location(s) of the person(s) have a minimum threshold illumination produced by one or more work lights 1006, and/or as a differential lighting pattern wherein the illumination in the position(s)/location(s) of the persons is set to increase from a current illumination level produced by the one or more work lights 1006.

In a second example, the system comprises one or more position sensors configured to measure position(s) of one or more parts of the working vehicle 1004. For example, the position sensor(s) may measure the position of an implement of the working vehicle, such as a bucket 1008 or a boom, and/or the position of a cabin 1010 of the working vehicle. The apparatus may then compute the lighting pattern target based on the position sensor data measured by the one or more position sensors. The lighting pattern target may be set to provide illumination to one or more areas at predetermined position(s) with respect to the position measured by the position sensor(s). The predetermined position may correspond to the measured position, or be at a predetermined offset from the measured position. The predetermined position and/or predetermined offset may be stored in the memory 20 of the apparatus, e.g. in the database 24 (see FIG. 2).

The position of the cabin 1010 often determines the viewing direction of an operator within the cabin. Seats in working vehicle cabins are often fixed with respect to the cabin. The position of the cabin may be measured by one or more position sensors e.g. by reading a value indicating the cabin position from the memory of the apparatus. The resulting cabin position data may be used by the apparatus to compute the lighting pattern target. For example, the lighting pattern target may determine that work lights whose beams light areas not visible from the cabin to be dimmed or turned off. The lighting pattern target may further determine that work lights whose beams light areas visible from the cabin to be illuminated and/or illuminated at a higher intensity.

The position measured by the position sensor(s) may comprise proximity of the implement to e.g. the cabin of the working vehicle. This may be measured e.g. by a proximity sensor to obtain proximity data. The apparatus may compute the lighting pattern target based on the proximity data. For example, a short distance between the implement and the cabin (close proximity) may correspond to lower brightness or intensity in the lighting pattern target, at least in the direction of the implement. In this case less light is needed to see the implement clearly, glare from light reflected by the implement is reduced, and power savings are obtained. A longer distance between the implement and the cabin may correspond to higher brightness or intensity in the lighting pattern target, at least in the direction of the implement.

The apparatus may use the sensor data to determine a working mode of the working machine. Referring now to FIG. 11, working machines such as forestry harvesters 1100 may operate in a plurality of working modes as trees are processed into logs and transported to another location. These working modes include e.g. cutting, delimbing, loading, driving, and unloading. The memory of the apparatus may store predetermined lighting profiles for the working modes. The apparatus may detect a working mode in response to e.g. user input via its UI 60, 62 or sensor data from sensors 50, 52 (see FIG. 2). This may trigger the apparatus to compute a lighting pattern target based on one of these predetermined lighting profiles associated with the working mode. Sensor data indicative of e.g. the operation of a chain saw, delimbing knives or feed rollers of a harvester head 1102 of the harvester 1100, or of movement of the harvester 1100 may be used by the apparatus to detect the working mode of the harvester 1100. For example, a predetermined position of the harvester head 1102 and rotation of the feed rollers are indicative of delimbing. As another example, movement sensor data which indicates that the harvester is in motion may correspond to dimming work lights in the light pattern target, and movement sensor data which indicates that the harvester has stopped or is stationary may correspond to increasing brightness or a higher brightness in the light pattern target. As another example, dimming work lights whose beams point at light-colored ends of logs in the loading and/or unloading modes is desired to avoid glare, and the lighting pattern target may be computed accordingly by the apparatus. As a further example, the cutting and delimbing steps are performed in close proximity to the harvester, and a lighting pattern target with a higher intensity near the harvester and a reduced intensity elsewhere may be computed by the apparatus. In this case, different brightnesses in these different areas allow for reducing glare while maintaining a sufficient level of lighting.

Optical structures of the work light(s) may be utilized to produce the different light patterns associated with different working modes. For example, tree top lighting may be provided for e.g. the cutting mode by activating LEDs facing optical structures configured to produce high beam and/or spot light patterns. These LEDs may be deactivated in some other working mode(s). Instead, other LEDs facing different optical structures may be activated to produce different light patterns, such as for general lighting around the harvester. The switch may be triggered by sensor data as discussed above, or by a user input from the operator of the harvester via an Ul.

Forwarders are often used together with harvesters, specifically for transporting logs from one location to another. A work light configured to illuminate a stack logs, usually the lighter-colored ends of the logs, may cause glare by reflection from the light-colored ends of the logs to an operator of the forwarder. One or more light sensors attached to e.g. the forwarder may be configured to detect this glare or reflection. The apparatus may, based on light sensor data measured by the light sensor(s), compute a lighting pattern target wherein the ends of the logs are subject to a lower level of illumination by the work lights under its control. On the work light(s), this switch may correspond to e.g. deactivating or dimming LEDs configured to produce e.g. a high beam light pattern, and/or activating LEDs configured to produce e.g. a low beam light pattern. As discussed above, different optical structures of the work light may be utilized to produce such light patterns by specifically activating and/or deactivating LEDs facing said optical structures. Thus, by having a reduced or zero brightness in the area of the ends of the logs, and optionally e.g. low beam lighting elsewhere, glare is avoided while maintaining a sufficient level of lighting.

In another example, a light sensor configured to detect glare may be used to detect visibility conditions. Light emitted by the work light(s) that is reflected by particles in the air, such as steam, snow, fog and/or dust such as sawdust, is indicative of the visibility in the surroundings of the working vehicle. As an alternative to light sensors, ultrasound sensor(s) may be used for the same purpose, and it may be less resistant to effects of accumulated particles such as dirt or dust. The apparatus may receive visibility sensor data from one or more such sensors, and detect a low visibility condition based on the sensor data. The apparatus may set a brightness, color temperature, and/or light pattern for the lighting pattern target according to the low visibility condition. Preferably, when the target is defined as a differential target, the brightness is lowered and/or the color temperature is decreased. This improves visibility and reduces glare. The target may preferably set the color temperature to 2800 K to 6000 K, preferably 3000 K to 5400 K, more preferably 3300 K to 4500 K, ideally 31000 K. These temperatures showed increasingly good visibility in dusty conditions in experiments carried out with a work light with adjustable color temperature.

In another example, a drill machine in a tunnel is equipped with a light sensor configured to detect glare as in the above example. Upon detection of a low visibility condition, work lights on or around the drill machine are controlled to direct light upwards. For example, referring now to FIG. 6, an upper beam 601 of one or more work light(s) may be activated. Alternatively or additionally, a drill rotation and/or position sensor may produce drill rotation and/or position data received by the apparatus controlling the work lights. The apparatus may control the work lights to provide illumination to the direction of the drilling based on the drill position data, e.g. to an area where a drill bit of the drill makes contact with a wall of the tunnel. The apparatus may control brightness of the work lights based on the drill rotation data, e.g. such that the brightness is dimmed or increased during drilling indicated by rotation of the drill.

Another example is related to co-operation between a combined harvester and a tractor. Generally, the tractor drives next to the combined harvester. However, before harvesting and threshing, the tractor often drives behind the combined harvester. The combined harvester may be equipped with a camera and a work light configured to illuminate the field of view of the camera behind the combined harvester. However, this work light may cause glare for the driver of the tractor. The camera and/or another sensor, such as a proximity sensor, is configured to detect the tractor behind the combined harvester. The apparatus receives sensor data from the camera/sensor and computes a lighting pattern target where lighting towards the from the combined harvester is dimmed or turned off. The apparatus sends the appropriate control signals to the work light and glare towards the tractor is avoided. In this example the apparatus receiving the sensor data and computing the lighting pattern target may preferably be an ECU of the combined harvester, or alternatively an ECU of the tractor.

In another example, light sensor data from one or more light sensors may be used by the apparatus to match the output of work light(s) to ambient lighting conditions, or to counteract the ambient lighting conditions. The light sensor(s) may be configured to measure brightness and/or color temperature of ambient light in the surroundings of the working vehicle. The apparatus may compute the lighting pattern target such that it matches the brightness and/or color temperature of the ambient light (within limits set by the characteristics of the work light(s)) to ensure maintaining an appropriate circadian rhythm by the operator of the working vehicle. Alternatively, the apparatus may compute the lighting pattern target to counteract the brightness and/or color temperature of the ambient light - for example, to promote alertness in the evening or at night.

A predetermined lighting profile may define one or more prioritized colors and/or one or more distraction colors. The prioritized colors may be more important for the operator to see in the context of the tasks being performed. The distraction color may correspond to e.g. that of dust or another distraction generally present in the surroundings. These colors may be different in different industries or different tasks. For example, in agriculture, colors of the crops and/or animals such as cattle may be prioritized colors. A plurality of profiles for e.g. different tasks may be stored in the memory of the apparatus, and a profile may be selected e.g. by user input via the UI. The apparatus may use the predetermined lighting profile to set the color temperature of the lighting pattern target such that it enhances visibility of the one or more prioritized colors and/or decreases visibility of the one or more distraction colors.

Predetermined lighting profiles may be associated with user profiles stored e.g. in the memory of the apparatus. A user or operator of a working vehicle may store user-specific technical requirements for the lighting produced by the work light(s) in the user profile and/or in the predetermined lighting profiles. For example, an older user may require a greater intensity of lighting than a younger user. The apparatus may store this as a technical requirement e.g. in the form of a brightness coefficient and/or minimum brightness threshold in the user profile and/or the predetermined lighting profiles associated with the user profile of the user. Additionally or alternatively, specific color temperature(s) and/or light patterns may be associated with the user profile.

As discussed, predetermined lighting profiles may correspond to working modes, users, industries, and/or tasks. Additionally or alternatively, the profiles may correspond to times of day. The apparatus may combine a plurality of predetermined lighting profiles to compute the lighting pattern target. These predetermined lighting profiles may comprise one or more of a predetermined working mode lighting profile, a predetermined user lighting profile, a predetermined time lighting profile, and/or a predetermined industry lighting profile. For example, the apparatus may combine a predetermined working mode lighting profile (e.g. unloading logs), a predetermined user lighting profile, a predetermined industry lighting profile (e.g. forestry), a predetermined time lighting profile (e.g. nighttime), and a predetermined user lighting profile (e.g. with a requirement for dim and warm lighting). The apparatus may combine these lighting profiles to achieve a lighting pattern target that takes all the requirements of the different profiles into account.

Referring again to FIG. 1, a plurality of work lights may be controlled by the apparatus with a group control signal. An example of a group control signal identifying the work lights to be controlled with a group ID by an ECU was provided in the above description. One work light may belong to zero, one or more groups. Control with group control signals allows for controlling two or more work lights to set the same group brightness level, group color temperature, and/or group light pattern for the work lights. For example, two work lights configured to illuminate the same area may be assigned to one group and controlled together.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as defined in the appended claims.

## Claims

1. A work light for illuminating the surroundings of a working vehicle, wherein the work light comprises:
a plurality of light emitting diodes, LEDs, arranged into a plurality of alternating rows of
- LEDs having a first correlated color temperature, CCT, and
- LEDs having a second CCT, wherein the first CCT is different from the second CCT; and
a controller configured to
- receive one or more control signals for setting a brightness, a color temperature, and/or a light pattern of the work light, and
- control brightness of the plurality of LEDs to set the brightness, the color temperature, and/or the light pattern of the work light according to the one or more control signals.

2. The work light of claim 1, wherein the controller is configured to set a brightness of the LEDs of a row of the plurality of alternating rows to a common row brightness level, and wherein optionally:
the LEDs of said row are connected in series.

3. The work light of claim 1 or 2, wherein the controller is configured to control the brightness of the plurality of LEDs such that the LEDs having the first CCT are set to a first brightness level and the LEDs having the second CCT are set to a second brightness level, and wherein optionally:
the LEDs having the first CCT are connected in series, and the LEDs having the second CCT are connected in series.

4. The work light of any one of claims 1 to 3, wherein the work light comprises one or more transmissive optical elements facing the plurality of LEDs, and wherein the one or more transmissive optical elements comprise a plurality of optical structures comprising:
one or more first optical structures facing first one or more of the plurality of LEDs, wherein the one or more first optical structures are configured to produce a first light pattern, and
one or more second optical structures facing second one or more of the plurality of LEDs, wherein the one or more second optical structures are configured to produce a second light pattern, and wherein the first light pattern is different from the second light pattern, and
wherein the controller is configured to illuminate the first one or more of the plurality of LEDs in response to receiving one or more control signals comprising instructions to set the first light pattern, and
wherein the controller is configured to illuminate the second one or more of the plurality of LEDs in response to receiving one or more control signals comprising instructions to set the second light pattern.

5. The work light of claim 4, wherein the first light pattern is configured to extend a first distance from the work light, and wherein the second light pattern is configured to extend a second distance from the work light, wherein the second distance is greater than the first distance.

6. The work light of claim 4 or 5, wherein the one or more first optical structures are configured to face one or more of the LEDs having the first CCT and one or more of the LEDs having the second CCT, and wherein the one or more second optical structures are configured to face one or more of the LEDs having the first CCT and one or more of the LEDs having the second CCT.

7. The work light of claim 6, wherein for each optical structure, of the plurality of optical structures, configured to face at least one LED having the first CCT or the second CCT:
the optical structure is further configured to face at least one LED having the other one of the first CCT and the second CCT, and/or
the plurality of optical structures comprise a further optical structure configured to face at least one LED having the other one of the first CCT and the second CCT and to produce the same light pattern as said optical structure.

8. The work light of claim 4 or 5, wherein the plurality of optical structures comprise, for each LED of the plurality of LEDs, an optical structure facing the LED, wherein the optical structure is configured to produce a different light pattern than the others of the plurality of optical structures.

9. A method of controlling one or more work lights according to any one of claims 1 to 8, wherein the method comprises:
computing a lighting pattern target based on one or more of:
- sensor data measured by one or more sensors configured to measure a working vehicle and/or surroundings of the working vehicle,
- one or more predetermined lighting profiles, and/or
- one or more user inputs received via a user interface of the working vehicle,
wherein the lighting pattern target defines at least a brightness, a color temperature, and/or a light pattern for the one or more work lights;
converting the lighting pattern target to one or more control signals comprising instructions for setting the brightness, the color temperature, and/or the light pattern of the one or more work lights in accordance with the computed lighting pattern target; and
outputting the one or more control signals to control the one or more work lights.

10. The method of claim 9, wherein the method comprises computing the lighting pattern target based at least on position sensor data measured by one or more position sensors configured to measure the position of an implement of the working vehicle and/or the position of a cabin of the working vehicle.

11. The method of claim 9 or 10, wherein the method comprises:
computing the lighting pattern target based at least on visibility sensor data measured by one or more visibility sensors configured to measure visibility in the surroundings of the working vehicle;
detecting a low visibility condition based on the visibility sensor data; and
setting a brightness, color temperature, and/or light pattern for the lighting pattern target based on the detected low visibility condition.

12. The method of any one of claims 9 to 11, wherein the method comprises:
computing the lighting pattern target based at least on light sensor data measured by one or more light sensors configured to measure a brightness and/or a color temperature of ambient light in the surroundings of the working vehicle; and
setting a color temperature of the lighting pattern target to correspond to the color temperature of the ambient light measured by the one or more light sensors, and/or
setting a brightness of the lighting pattern target to counteract or correspond to the brightness of the ambient light measured by the one or more light sensors.

13. The method according of any one of claims 9 to 12, wherein the one or more work lights comprise a plurality of work lights according to any one of claims 1 to 8, and wherein the one or more control signals comprise a group control signal comprising instructions for setting a group brightness level, a group color temperature, and/or a group light pattern for at least two of the plurality of work lights.

14. The method of any one of claims 9 to 13, wherein the method comprises:
setting, for the lighting pattern target, a first brightness level for first one or more LEDs of the one or more work lights and a second brightness level for second one or more LEDs of the one or more work lights, the first brightness level being different from the second brightness level, wherein the first one or more LEDs are configured to provide lighting to a first area in the surroundings of the working vehicle, and wherein the second one or more LEDs are configured to provide lighting to a second area in the surroundings of the working vehicle.

15. The method of claim 14, wherein the first brightness level or the second brightness level is zero.

16. A computer program product comprising computer program code configured to, when executed by one or more processors, cause an apparatus to perform the method of any one of claims 9 to 15.

17. An apparatus configured perform the method of any one of claims 9 to 15 to control one or more work lights according to any one of claims 1 to 8.

18. A system comprising one or more work lights according to any one of claims 1 to 8 and the apparatus of claim 17.

19. A working vehicle comprising the apparatus of claim 17 or the system of claim 18.
